# EUROPEAN PATENT APPLICATION

(11) **EP 4 563 007 A1**
(43) Date of publication of application: **04.06.2025**
(21) Application number: 24216333.5
(22) Date of filing: 29.11.2024
(51) Int. Cl.: A23L 13/60

(54) **METHOD FOR THE INDUSTRIAL PRODUCTION OF WHITE SAUSAGE**

(30) Priority: 29.11.2023 BE 202305972
(71) Applicant: Produits de Viande d'ARGIFRAL SA, 4650 Herve (BE)
(72) Inventor: VAN DAMME, Philippe, 4650 Herve (BE)
(74) Representative: Brantsandpatents bv

(57) **Abstract**

The current invention relates to a method for the industrial production of a white sausage, wherein said white sausage is made of a meat paste comprising pork cooked in a casing, the production of said meat paste comprises cutting pork meat in a first cutting device, wherein during said cutting at least bread and onions are added, thereby obtaining a first meat mixture, and wherein said first meat mixture is subsequently processed in a meat grinder with an auger, after which said processed, ground meat is transferred to and cut in a second cutting device, wherein during said cutting in said second cutting device further at least spices, salt, milk and eggs are added to the ground meat being cut, thereby obtaining said meat paste. The current invention also relates to a white sausage.

## Description

### FIELD OF THE INVENTION

The present invention relates to a method for the industrial production of white sausage. More specifically, the invention pertains to the preparation and processing of a meat paste used to produce white sausages.

### BACKGROUND

White sausages are a popular meat product enjoyed by consumers worldwide. The traditional production methods for white sausages involve various stages, including meat preparation, cutting or grinding, mixing with additives, cooking, and cooling. RU2211615 for instance describes a method for producing such sausage. While conventional processes have been effective, they may result in inconsistent texture, suboptimal mouthfeel, and challenges related to maintaining quality and safety throughout the production process.

There remains a need in the art for an improved method for producing white sausages that addresses the issues associated with conventional processes and results in a product with enhanced characteristics, including improved homogeneity, texture, bite, and mouthfeel.

### SUMMARY OF THE INVENTION

The present invention and embodiments thereof serve to provide a solution to one or more of above-mentioned disadvantages. To this end, the present invention relates to a method for the industrial production of a white sausage according to claim 1.

In particular, the white sausage is made of a meat paste comprising pork cooked in a casing, and the method comprises the production of said meat paste comprising cutting pork meat in a first cutting device, wherein during said cutting at least bread and onions are added, thereby obtaining a first meat mixture, and wherein said first meat mixture is subsequently processed in a meat grinder with an auger, after which said processed, ground meat is transferred to and cut in a second cutting device, wherein during said cutting in said second cutting device further at least spices, salt, milk and eggs are added to the ground meat being cut, thereby obtaining said meat paste.

Preferred embodiments of the method are shown in any of the claims 2 to 14.

In a second aspect, the present invention relates to a white sausage according to claim 15, obtained by the method of the first aspect.

This method results in an improved homogeneity of the meat paste. The method further results in white sausages having a better and firmer texture, as well as having a improved "bite" and mouthfeel.

### DETAILED DESCRIPTION OF THE INVENTION

The present invention concerns a method for the industrial production of white sausage, wherein said white sausage is made of a meat paste comprising pork cooked in a casing, and wherein the production of said meat paste comprises a cutting step, a grinding step, and again a cutting step.

This method results in an improved homogeneity of the meat paste. The method further results in white sausages having a better and firmer texture, as well as having a improved "bite" and mouthfeel.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect, the invention provides a method for the industrial production of white sausage, wherein said white sausage is made of a meat paste comprising pork cooked in a casing.

The production of said meat paste comprises cutting pork meat at a temperature of 12 °C or less in a first cutting device, said first cutting device having a shaft equipped with blades and a shaft speed of between 380 and 1000 rpm, wherein during said cutting at least bread and onions are added, thereby obtaining a first meat mixture. Optionally, water is added to the meat or to the meat mixture.

Preferably, the pork meat is initially provided at a temperature of 7 °C or less to ensure microbiological safety and high quality.

Subsequently said first meat mixture is processed in a meat grinder with an auger, and said meat mixture is grinded with the grinder by forcing it through a blade plate with openings by the movement of the auger at a temperature of 12 °C or less. Preferably, the openings have a diameter of below 5 mm, preferably below 4 mm, such as 3 mm.

After that, said processed, ground meat is transferred to and cut in a second cutting device having a shaft equipped with blades and a shaft speed of between 1000 and 1500 rpm, at a temperature of below 12 °C, wherein during said second cutting at least spices, salt, milk and eggs are added, thereby obtaining said meat paste.

This method combining a first cutting step, followed by a grinding step, and again a cutting step, preferably results in a reduced cutting time, and results in an improved homogeneity of the meat paste, at least partly because of improved unfolding of proteins. This also has the advantage that the protein structure and functionality in the meat is better preserved. As a result, white sausages made from this meat paste have a better and firmer texture and are less likely to break or fall apart. As a consequence, white sausages based on this meat paste will be less likely to be rejected for sale, and less waste will be produced.

Additionally, this method results in a white sausage with a better and firmer "bite," as well as an enhanced mouthfeel. In the context of food, the term "bite" refers to the texture and consistency of food when chewed. It is the level of resistance or firmness experienced when biting into a piece of food. A good "bite" is often associated with a pleasing texture and mouthfeel. It can range from food that is soft and easy to chew to food that offers more resistance and has a firmer texture. Generally, the "bite" of food contributes to the overall eating experience and can influence taste perception. Thus, enhancing the "bite" and mouthfeel is crucial when producing a meat product suitable for consumption, such as a white sausage.

Each of the steps, the cutting, grinding, and cutting again, are performed at a temperature of 12 °C or less, which is optimal for achieving a firm meat paste, which is necessary for further processing, i.e. cooking, and obtaining the white sausage. If the temperature is lower, the proteins are not or not sufficiently functional. If the temperature is too high, certain proteins can denature before the actual cooking step and/or lose their functionality.

It was further seen that the shaft speed of 380 to 1000 rpm for the first cutting device, and 1000 to 1500 rpm for the second cutting devices was high enough to efficiently cut the meat in a relative short time, while keeping the temperature in the cutting device at 12 °C or below, which leads to the desired meat paste. A higher shaft speed would result in heating of the meat paste above the desired temperature, while a lower shaft speed would increase the time to cut the meat.

Also, by maintaining the shaft speeds between 380 and 1500 rpm, and keeping the temperature at 12 °C or lower, during the cutting process, the particle size of the meat paste to be cooked can be better controlled. The proteins present in the meat paste bind and stabilize the paste. The extent of binding, i.e., the degree of activation of these proteins, strongly depends on the size of the particles in the meat paste.

This particle size is influenced by the temperature and temperature profile during the cutting process. Thus, the degree of protein activation is also regulated.

By cutting the meat paste using a second cutting device after reducing the meat size by forcing it through the openings of the blade plate, rather than solely and completely grinding it through a meat grinder with an auger, or rather than solely cutting it in a cutting device, the meat paste can be more finely cut. This is due, in part, to improved emulsification of fats and better activation of proteins.

In an embodiment, the first and second cutting devices are the same device. In another embodiment, the first and second cutting devices, are different devices.

The bread added to the meat in the first cutting device also enhances the texture and consistency of the meat paste to be cooked, by absorbing excess moisture and fat. It also acts as a binder, contributing to the cohesive structure of the meat paste by the meat particles together.

The onions, on the contrary, release moisture, which can be absorbed by the meat mixture, enhancing moisture retention and juiciness in the final product. They also add a slightly fibrous texture to the meat paste, diversifying the mouthfeel and enhancing the overall eating experience.

Salt can enhance protein solubility and denaturation, which influences the binding properties of proteins. This can lead to better protein interaction and gel formation, contributing to a firmer and more cohesive meat paste. Salt can also improve the water-holding capacity of proteins, aiding in the retention of moisture and preventing excessive drying during processing.

Proteins from milk can contribute to the emulsification of fats, leading to a finer distribution of fat globules within the meat paste. This can result in a smoother and more homogenous texture. Further, milk proteins contain enzymes that can have a tenderizing effect on meat proteins, potentially leading to a softer and more succulent final product.

Finally, eggs contain proteins that can act as binders and coagulate during cooking, helping to hold the meat paste together and maintain its shape. This can contribute to a well-structured and less crumbly meat paste. Similar to milk, eggs can contribute to moisture retention, ensuring that the meat paste remains juicy and appealing.

The method of the invention thus provides an optimal meat paste to be cooked, resulting in a white sausage with desirable texture, bite, and mouthfeel.

As indicated, the method requires the meat paste to be cooked in a casing. In an embodiment, the casing is a natural of synthetic casing. In another or further embodiment, the casing is filled with a desired amount of meat paste using a meat filler device, and subsequently closed, preferably at a temperature of below 12 °C.

Non-limiting examples of natural casings are hog casings and sheep casings. The former ones are the most traditional natural casings used for sausages, sourced from the intestines of pigs and are known for their natural curve, tender bite, and traditional appearance. The latter ones are derived from sheep intestines, and are smaller in diameter compared to hog casings. Sheep casings provide a delicate bite and are favored for their fine texture.

Non-limiting examples of synthetic casings are collagen casings, cellulose casings, fibrous casings, plastic casings, and alginate casings.

"Collagen casings" are made from collagen extracted from animal hides or bones. They offer versatility in terms of size and appearance, and they are available in both edible and non-edible varieties. Collagen casings provide a consistent diameter and are popular for their uniformity and ease of use. "Cellulose casings" are made from plant-based materials, primarily wood pulp. They are non-edible, but provide a tight and uniform appearance. "Fibrous casings" are made from a combination of paper and wood pulp. They are non-edible, but hold their shape well during cooking and smoking processes. "Plastic casings" are made from materials like polyethylene or polypropylene. They are used for various types of sausages, and offer good moisture and oxygen barrier properties. "Alginate casings" are made from seaweed extracts and provide a unique texture and can be suitable for various dietary preferences.

In a further embodiment, the meat filler device is loaded with the meat paste, before filling the casing by forcing the desired amount of meat paste through a nozzle of the filler device into the casing.

Filling with a meat filler device, ensures accurate portioning and consistent filling of the casings, resulting in uniform-sized sausages. It also speeds up the process, allowing for higher production rates and reduced labor costs, and the precise filling process helps minimize product waste, ensuring that each casing is optimally utilized.

Subsequently, the sausages are cooked in the casing.

In an embodiment, the meat paste in the casing is cooked in a hot water bath until the meat paste reaches a core temperature of between 70 and 80 °C for at least 45 minutes, preferably until a core temperature of at least between 73 and 75 °C is reached for at least 45 minutes. Preferably, the cooking requires the desired core temperature to be reached for between 45 and 75 minutes. The hot water bath is heated to a target temperature of about 74 °C.

The advantages of cooking in a hot water bath are the gentle and even heat distribution, ensuring that the core of the sausage reaches the desired temperature consistently, thereby forming the desired binding and texture of the sausage. Cooking in a hot water bath also ensures improved moisture retention resulting in a juicy and succulent texture in the final white sausages. Cooking at these temperatures for an adequate duration ensures that harmful bacteria and pathogens are effectively eliminated, enhancing the safety of the sausages for consumption.

In an embodiment, the meat paste in the casing is cooked in a hot water bath with salted water, preferably having a salt concentration of between 1.4 and 1.5 wt.%.

Cooking in salted water can lead to a more evenly seasoned sausage, as the salt penetrates the meat paste during the cooking process. In addition, the salted water can contribute to protein denaturation and coagulation, leading to improved binding and texture in the final sausages. It further helps inhibit the growth of certain microorganisms, enhancing food safety during cooking.

In an embodiment, the meat paste in the casing is cooked in an oven until the meat paste reaches a core temperature of between 75 and 90 °C for at least 45 minutes, preferably until a core temperature of at least between 80 and 82 °C is reached for at least 45 minutes. Preferably, cooking in the oven requires the desired core temperature to be reached for between 45 and 60 minutes. The oven is set to a target temperature of about 85 °C.

Oven cooking at a core temperature of 75-90 °C can result in a more-browned exterior and a firmer texture, enhancing visual appeal and mouthfeel. The higher temperature range can promote slight caramelization on the sausage's surface, adding flavor complexity and visual attractiveness. Oven cooking allows for controlled and gradual heat application, reducing the risk of overcooking or uneven cooking throughout the sausages.

In an embodiment, the white sausage after cooking of the meat paste in the casing is cooled down to a temperature of 12 °C or less, wherein the cooling down comprises a step of bringing the white sausage in contact with ice water at a temperature of between 4 and 6 °C.

This results in a rapid and controlled cooling of the cooked sausages, thereby helping to prevent the growth of harmful microorganisms and minimizes the risk of bacterial contamination during the cooling process. Efficient cooling further allows for faster processing times, which can be advantageous in a production setting, enabling higher throughput and reduced production cycles. It also helps in preserving the texture and moisture content by preventing overcooking or excessive moisture loss. This results in a final product that is succulent, tender, and maintains its juiciness.

In a further embodiment, said ice water is further in contact with one or more thermally conductive panels at between -3 °C and -9 °C, preferably between -4 °C and -8 °C, preferably between -5 °C and -7 °C, preferably about -6 °C before, during and/or after cooling the sausage.

The precise and uniform cooling process facilitated by the ice water and thermally conductive panels ensures that each white sausage undergoes the same cooling conditions. This leads to consistent product quality throughout the batch. The system can also contribute to energy savings, as the system takes advantage of efficient heat exchange methods for cooling.

In an embodiment, the white sausage is brought into a water bath comprising water with lactic acid. This can be the above mentioned ice-water bath, or a further water bath.

Lactic acid has antimicrobial properties that can help inhibit the growth of harmful bacteria and pathogens. Using a water bath with lactic acid can provide an additional layer of microbial safety, further reducing the risk of contamination during the cooling process and inhibiting the growth of spoilage microorganisms thereby increasing shelf life as well. Moreover, lactic acid can help maintain the natural color and appearance of the white sausage by slowing down oxidation and enzymatic browning reactions that can occur during cooling and storage, and helps preserve the flavors and aromas of the white sausage, leading to a more appealing and enjoyable taste experience for consumers.

Lactic acid is a naturally occurring compound and is considered safe for consumption. Using lactic acid in the water bath can be perceived as a more environmentally friendly preservation method compared to some chemical additives.

In an embodiment, the lactic acid is used at a concentration of between 7 and 9 g/L water in the water bath, such as 7 g/L water, 7.5 g/L water, 8 g/L water, 8.5 g/L water, or 9 g/L water in the water bath. Preferably a concentration of 8 g/L water is used. This concentration is sufficient to inhibit the growth of microorganisms and provide the above-mentioned advantages, while not adversely affecting the quality or taste of the white sausage, ensuring compatibility with the equipment used in the process, and while avoiding increased costs. As a non-limiting example, a concentration of 8 g/L can be obtained by providing a lactic acid 80 % solution in the water bath at a concentration of 10 %.

In another or further embodiment, the cooling of the white sausage after cooking is performed in at least two steps, wherein the cooked sausage is cooled down to a temperature of below 22 °C, preferably a temperature of between 14 and 22 °C, preferably in an ice water bath of between 4 and 6 °C, and subsequently brought into a water bath comprising water with lactic acid.

Preferably, the advantages of this two-step system are as described above for each step separately. Preferably, said ice water is further in contact with one or more thermally conductive panels at between -3 °C and -9 °C, preferably between -4 °C and -8 °C, preferably between -5 °C and -7 °C, preferably -6 °C before, during and/or after cooling the sausage.

Preferably, the thermally conductive panels, which serve as a heat exchange medium, are vertically positioned. The ice water circulates between and over the panels, preferably at least partly by gravity, thereby efficiently cooling the ice water before it flows towards the ice water baths.

Preferably, the ice water forms a closed circuit over the thermally conductive panels and the ice water bath(s), thereby providing an economical system and saving water.

In an embodiment, the water bath comprising water with lactic acid is not actively cooled, and is preferably at a temperature of maximum about 15 °C.

In another or further embodiment, the white sausage is subsequently further cooled in a refrigerator to a temperature of maximally 12 °C. In a further preferred embodiment, the refrigerator is at a temperature of between 1 to 4 °C.

The final step involves conditioning and packaging the white sausage at a temperature of 12 °C or less, wherein the actual packaging is done once the sausage reaches a temperature of 4 °c or below. This step ensures the preservation of flavor, quality, and safety throughout the packaging process.

This conditioning might include a quality inspection: before packaging, each sausage might undergo a visual and/or sensory quality inspection. This involves checking for consistency in color, texture, and appearance. Any sausages that do not meet the desired standards might be removed from the batch.

Additionally, a metal detection process may be performed on the meat paste before inserting it in the casing, to identify and remove any potential metal contaminants, further enhancing product safety.

In an embodiment, the white sausage is packaged under vacuum, under a protective atmosphere, and/or in bulk.

In a second aspect, the invention concerns a white sausage, preferably obtained by the method as described above in any one of the embodiments.

The present invention will be now described in more details, referring to examples that are not limitative.

### EXAMPLES

The present invention will now be further exemplified with reference to the following examples. The present invention is in no way limited to the given examples.

### Example 1: Method for the Industrial Production of a White Sausage

### Step 1: Meat Preparation and Initial Cutting

Pork meat is selected for the white sausage production, and provided at a preferred temperature of 7 °C or less. It is subsequently provided in a first cutting device at a controlled temperature of 12°C, and carefully cut into smaller pieces using the first cutting device having a shaft equipped with blades and a shaft speed of between 380 and 1000 rpm. This temperature-controlled and speed-controlled cutting process prevents protein denaturation and maintains the desired meat texture.

During the initial cutting process, additional ingredients like bread and onions are introduced to the meat. This forms the basis of the first meat mixture.

### Step 2: Grinding

The first meat mixture is transferred to a meat grinder equipped with an auger. The meat is ground by forcing it through a blade plate with openings of less than 4 mm to achieve a consistent texture and distribution of ingredients. This grinding process takes place at 12°C or lower to preserve protein integrity.

The grinding results in homogenizing the mixture and enhancing protein cohesion.

### Step 3: Secondary Cutting and Ingredient Incorporation

The processed, ground meat is then transferred to a second cutting device with a shaft containing blades, and a shaft speed of between 1000 and 1500 rpm. During this secondary cutting, additional spices, salt, milk, and eggs are meticulously added to the mixture. The blades' action combines these ingredients into the final meat paste, ensuring even distribution.

The second cutting process occurs at a temperature below 12°C, similar to the previous steps, to maintain protein functionality.

### Step 4: Filling and Cooking

The meat paste, now perfectly mixed and textured, is used to fill casings. These casings can be natural or synthetic and are filled using a precise meat filler device to ensure accurate portioning.

Once filled, the casings are closed, and the white sausages are ready for cooking.

Cooking can be achieved through methods such as a hot water bath or an oven. The sausages are cooked until they reach the desired core temperature, ensuring proper food safety standards are met.

The filled casings are either immersed in a hot water bath until a core temperature of the meat paste reaches 73-75 °C for a minimum of 45 minutes, ensuring thorough cooking and microbial safety. The hot water bath preferably has a salt concentration of between 1.4 and 1.5 wt.%.

Alternatively, the filled casings are cooked in an oven until a core temperature of the meat paste reaches about 80-82 °C for at least 45 minutes. This oven cooking method can lead to a more browned exterior and enhanced flavor complexity.

### Step 5: Rapid Cooling

After cooking, rapid two-step cooling is preferred to lock in the texture and flavor achieved through the careful preparation steps.

The white sausages are quickly cooled down to 22 °C or lower by immersing them in an ice water bath. The ice water bath is maintained at a temperature between 4 and 6 °C.

To enhance cooling efficiency, the ice water bath is in contact with thermally conductive panels set at a target temperature of - 6 °C, preferably maintained between -5 °C and -7 °C. This controlled cooling ensures consistent results across each sausage.

Subsequently, the sausages are transferred to a water bath containing lactic acid, which serves both as a food safety measure and a quality enhancer. The lactic acid concentration is maintained between 7 and 9 g/L water, preferably at 8 g/L water, effectively inhibiting microbial growth while preserving flavor and appearance. The water bath temperature is not actively cooled but is maximum about 15 °C.

After the two-step cooling process, the sausages are further cooled down to a temperature of maximally 12 °C by placing them in a refrigerator. The refrigerator maintains a temperature range between 1 and 4 °C, ensuring that the sausages are properly chilled and ready for the final step.

### Example 2: improved characteristics of the white sausage.

The white sausages produced using the method described in Example 1 were assessed by a panel of testers. The following characteristics were assessed:
*Texture and Cohesion:* Testers evaluated the sausage's texture and how well the meat held together. The use of controlled temperatures and multiple cutting steps contributed to enhanced protein unfolding, resulting in improved homogeneity and cohesion of the meat paste.

*Bite and Mouthfeel:* The mouthfeel of the sausages was assessed, including factors like tenderness and resistance to biting. The careful processing steps ensured that the sausages had a desirable bite and mouthfeel.

*Flavor and Taste:* Testers evaluated the flavor and taste of the white sausages. The incorporation of additional ingredients and the optimized processing steps led to sausages with a well-balanced and appealing flavor profile.

*Homogeneity:* The distribution of ingredients throughout the sausages was examined. The method's focus on consistent grinding, mixing, and cutting resulted in improved homogeneity, ensuring that each bite offered a consistent experience.

*Safety and Preservation:* The effectiveness of the rapid cooling process and potential use of lactic acid in a water bath were assessed for their ability to preserve the sausages' quality and inhibit microbial growth.

The evaluation revealed that the white sausages produced using the method demonstrated improvements in many of the evaluated characteristics. The enhanced homogeneity, improved texture, and optimized protein functionality resulted in a product that met high standards for quality, taste, and safety.

The present invention, as exemplified in the above description and examples, offers a comprehensive solution to the challenges associated with traditional white sausage production methods. By optimizing the meat preparation, processing, cooking, and cooling steps, the method results in white sausages with enhanced quality, flavor, and safety attributes. The use of controlled temperatures and multiple cutting and grounding devices, as well as the incorporation of additional ingredients, contributes to the improved texture and mouthfeel of the meat paste, ultimately leading to a superior white sausage product.

It should be understood that the above description and examples are provided for illustrative purposes only and should not be construed as limiting the scope of the invention. Various modifications and changes may be made to the embodiments described above without departing from the scope of the invention as defined by the appended claims.

## Claims

1. Method for the industrial production of a white sausage, wherein said white sausage is made of a meat paste comprising pork cooked in a casing, the production of said meat paste comprises cutting pork meat at a temperature of 12 °C or less in a first cutting device, said first cutting device having a shaft equipped with blades and a shaft speed of between 380 and 1000 rpm, wherein during said cutting at least bread and onions are added, thereby obtaining a first meat mixture, and wherein said first meat mixture is subsequently processed in a meat grinder with an auger, and said meat mixture is grinded with the grinder by forcing it through a blade plate with openings by the movement of the auger at a temperature of 12 °C or less, after which said processed, ground meat is transferred to and cut in a second cutting device having a shaft equipped with blades and a shaft speed of between 1000 and 1500 rpm, at a temperature of below 12 °C, wherein during said cutting in said second cutting device further at least spices, salt, milk and eggs are added to the ground meat being cut, thereby obtaining said meat paste.

2. Method according to claim 1, wherein the white sausage after cooking of the meat paste in the casing is cooled down to a temperature of 12 °C or less, wherein the cooling down comprises a step of bringing the white sausage in contact with ice water at a temperature of between 4 and 6 °C, wherein said ice water is further in contact with one or more thermally conductive panels at between -5 °C and -7 °C before, during and/or after cooling the sausage.

3. Method according to claim 1 or 2, wherein the white sausage after cooking of the meat paste in the casing is brought into a water bath comprising water with lactic acid.

4. Method according to any one of the previous claims, wherein the white sausage after cooking of the meat paste in the casing is cooled down to a temperature of 12 °C or less, wherein the cooling is performed in at least two steps, wherein the cooked sausage is cooled down to a temperature of below 22 °C in an ice water bath of between 4 and 6 °C, and subsequently brought into a water bath comprising water with lactic acid.

5. Method according to any one of claims 3 to 4, wherein the lactic acid is at a concentration of between 7 and 9 g/L water in the water bath.

6. Method according to any one of the previous claims, wherein the white sausage after cooking of the meat paste in the casing is further cooled in a refrigerator to a temperature of maximally 12 °C.

7. Method according to any one of the previous claims, wherein the casing is a natural of synthetic casing, and is filled with a desired amount of meat paste using a meat filler device, and subsequently closed, preferably at a temperature of below 12 °C.

8. Method according to claim 7, wherein the meat filler device is loaded with the meat paste, before filling the casing by forcing the desired amount of meat paste through a nozzle of the filler device into the casing.

9. Method according to any one of the previous claims, wherein the meat paste in the casing is cooked in a hot water bath until the meat paste reaches a core temperature of at least between 73 and 75 °C for at least 45 minutes.

10. Method according to any one of claims 1 to 8, wherein the meat paste in the casing is cooked in an oven until the meat paste reaches a core temperature of at least between 80 and 82 °C for at least 45 minutes.

11. Method according to any one of claims 1 to 9, wherein the meat paste in the casing is cooked in a hot water bath with salted water, preferably having a salt concentration of between 1.4 and 1.5 wt.%.

12. Method according to any one of the previous claims, wherein the first and second cutting devices are the same devices.

13. Method according to any one of the previous claims, wherein the pork meat is initially provided at a temperature of 7 °C or less.

14. Method according to any one of the previous claims, wherein the white sausage is packaged under vacuum, under a protective atmosphere, and/or in bulk.

15. White sausage obtained by a method according to any of claims 1 to 14.
